# DEMANDE DE BREVET EUROPEEN

(11) **EP 1 557 767 A1**
(43) Date de publication de la demande: **27.07.2005**
(21) Numéro de dépôt: 04291340.0
(22) Date de dépôt: 28.05.2004
(51) Int. Cl.: G06F 13/38

(54) **Procédé et système de transmission de messages dans un réseau d'interconnexions.**

(30) Priorité: 21.01.2004 FR 0400554
(71) Demandeur: Arteris, 75008 Paris (FR)
(72) Inventeur: Douady, César, 91400 Orsay (FR); Boucard, Philippe, 78150 Le Chesnay (FR)
(74) Mandataire: Casalonga, Axel

(57) **Abrégé**

Procédé de transmission de messages dans un réseau d'interconnexions comprenant des éléments initiateurs de messages, des éléments de commutation de messages, et des éléments destinataires de messages. Les messages comprennent un en-tête et un contenu, et sont destinés à des éléments de traitement capables de traiter un quantum de données du contenu d'un message indépendamment des autres quanta de données du contenu du message. On débute la transmission d'un premier message par un agent de commutation 4, on mémorise l'en-tête E₁ du premier message, on interrompt, sur commande, la transmission du premier message, puis on débute la transmission d'un second message qui a pour contenu la partie non transmise (A₃A₄) du contenu du premier message.

## Description

La présente invention concerne un procédé et un système de transmission de messages dans un réseau d'interconnexions.

Les réseaux d'interconnexions sont des moyens de transmission de messages entre différents agents électroniques ou informatiques, ou entités communicantes. Une transmission peut être faite sans effectuer de traitement du message, ou bien en effectuant un traitement du message. On parle dans tous les cas de transmission de messages. On entend par traitement d'un message, par exemple une analyse de données contenues dans le message, ou bien une modification de données du message.

Un message est, bien entendu, une suite de données informatiques, c'est-à-dire une suite de bits ou d'octets agencés avec une sémantique spécifique, et représentant une information atomique complète. Chaque message comprend un en-tête de message, qui comprend principalement l'adresse de destination du message. Chaque message comprend également un contenu. Un message est soit une requête émise par un agent initiateur de messages, soit une réponse émise par un agent destinataire ou cible de messages.

Un réseau d'interconnexions idéal, en terme de performance de fonctionnement, serait certainement un réseau totalement interconnecté, c'est-à-dire un réseau dans lequel chaque paire d'agents est connectée par une liaison point à point. Ceci est cependant irréaliste, car trop compliqué, en termes de réalisation matérielle, dès que l'on dépasse quelques dizaines d'agents. Il est donc souhaitable que le réseau d'interconnexions puisse assurer l'ensemble des communications entre agents avec un nombre limité de liens par agent.

Dans un réseau d'interconnexions, une entrée d'un agent est reliée à au plus un agent initiateur de messages, ou à au plus un agent de transmission de messages.

Les réseaux d'interconnexions comprennent des dispositifs de transmission ou routeurs ("switch" en langue anglaise), une organisation du réseau assurant le lien entré les routeurs et les autres agents, et un ensemble de routage qui assure la circulation des messages au sein de l'organisation du réseau.

Un routeur est un agent actif du réseau d'interconnexions qui reçoit en entrée des messages venant d'un ou plusieurs agents et qui achemine ou route chacun de ces messages respectivement vers leur agent de destination ou vers un autre routeur. Ce routage est effectué au moyen de l'adresse de l'agent destinataire du message, ou agent cible, qui est présente dans l'en-tête du message à router.

L'organisation d'un réseau constitue la structure physique reliant les différents noeuds ou points de connexions d'un réseau d'interconnexions.

L'ensemble de routage gère la manière dont est routé, ou acheminé, un message depuis un agent source émettant le message jusqu'à un agent destinataire du message à travers des routeurs en empruntant un chemin de routage.

Le fonctionnement de certaines applications oblige à conserver l'ordre des messages circulant dans le réseau d'interconnexions. Le protocole de transmission de message sera dans la suite un protocole n'autorisant pas de modification de l'ordre des messages transmis par un agent initiateur de messages. Un agent peut bien sûr être un agent initiateur de messages et un agent destinataire de messages.

L'utilisation de réseaux intégrés dans un circuit de système sur puce met en relation des éléments qui échangent des messages par des protocoles asynchrones, donc non prédictibles. En outre, il est nécessaire d'avoir des caractéristiques de traitement en temps réel, amenant le réseau d'interconnexions à posséder un comportement plus déterministe. Ces deux notions semblent apparemment contradictoires. Un moyen de tenir compte simultanément de ces deux contraintes est d'offrir une qualité de service au sein du réseau d'interconnexions qui relie les différents agents, pour certaines transactions. On entend par transaction une suite de messages formant une requête émise par un agent initiateur à destination d'un agent destinataire et la réponse émise par l'agent destinataire à cette requête. La qualité de service est définie par un algorithme qui permet, pour un lien entre deux agents de choisir un message à émettre parmi un ensemble de messages disponibles.

Des solutions existent, faisant un compromis entre, d'une part, l'émission de messages courts qui favorise une latence faible, et procure une réactivité importante entre la requête envoyée par un agent initiateur et la réponse de l'agent destinataire, et donc une qualité de service élevé, au détriment de l'efficacité de la bande passante, car les messages étant courts, une grande partie de la bande passante est constituée d'en-têtes de messages et non de contenus de messages, et, d'autre part, l'émission de messages longs, qui favorise une bande passante efficace, mais une réactivité plus faible, et donc une qualité de service plus faible.

Il s'agit donc d'obtenir la bande passante la meilleure possible tout en ayant la meilleure qualité de service possible, à un coût acceptable.

Une solution est, par exemple, de donner la priorité à la qualité de service, en privilégiant les petites transactions, formées par de petits messages, afin de pouvoir intercaler à tout moment une transaction de haute priorité entre deux transactions de priorité plus basse déjà en cours de routage ou transmission. Les ressources dédiées aux liens sont alors surdimensionnées pour garantir le débit souhaité, car les données représentant des entêtes de messages prennent alors une grande proportion de la bande passante. Cette solution est coûteuse.

Une autre solution est de donner la priorité à la bande passante, en privilégiant les grandes transactions, formées de longs messages, afin de maximiser le transfert de données utiles, c'est-à-dire de contenus de messages. Cette solution ne procure pas de bonne qualité de service.

Il existe également des solutions mettant en oeuvre des éléments matériels sophistiqués pour modifier l'ordre des messages dans des files spécialisées, afin d'optimiser les accès à un même agent cible. Ces solutions ont un coût élevé.

Aussi, au vu de ce qui précède, l'invention a pour but de concilier une bande passante la meilleure possible et une qualité de service la meilleure possible, à un coût acceptable.

Ainsi, selon un aspect de l'invention, il est proposé un procédé de transmission de messages dans un réseau d'interconnexions comprenant des éléments initiateurs de messages, des éléments de commutation de messages, et des éléments destinataires de messages. Les messages comprennent un en-tête et un contenu comprenant des quanta de données, et sont destinés à des éléments destinataires capables de traiter un quantum de données du contenu d'un message indépendamment des autres quanta de données du contenu du message. On débute la transmission d'un premier message par un agent de commutation, on mémorise l'en-tête du premier message, on interrompt, sur commande, la transmission du premier message, puis on débute la transmission d'un second message qui a pour contenu 1a partie non transmise du contenu du premier message.

Un quantum de données est une quantité prédéterminée de données, par exemple 1, 2 ou 4 octets. Il est possible d'interrompre la transmission d'un message long pour effectuer une action plus prioritaire, comme transmettre un message de priorité plus élevée, et de reprendre ultérieurement la transmission du message interrompu, en stockant uniquement l'en-tête de ce message long.

Dans un mode de mise en oeuvre préféré, l'en-tête d'un message comprenant une information de taille indiquant la taille du contenu du message, on met à jour, au fur et à mesure de la transmission des quanta de données du contenu du premier message, l'information de taille de l'en-tête mémorisé du premier message, indiquant la taille du contenu non transmis du premier message, pour obtenir un en-tête de second message.

En d'autres termes, on met à jour une information de taille du contenu de l'en-tête mémorisé du premier message, au fur et à mesure de la transmission de quanta de données du premier message.

Ainsi, le message transmis ultérieurement, comprenant la partie non transmise du contenu du premier message, indique dans son en-tête la taille de son contenu.

Dans un mode de mise en oeuvre avantageux, l'en-tête d'un message comprenant une information d'adresse indiquant une adresse de début de stockage du contenu du message, on met à jour, au fur et à mesure de la transmission des quanta de données du contenu du premier message, l'information d'adresse de l'en-tête mémorisé du premier message, indiquant l'adresse de début de stockage du contenu du premier message, pour obtenir un en-tête de second message.

En d'autres termes, on met à jour une information d'adresse de début de stockage du contenu de l'en-tête mémorisé du premier message, au fur et à mesure de la transmission de quanta de données du premier message.

Ainsi, le message transmis ultérieurement, comprenant la partie non transmise du contenu du premier message, indique dans son en-tête l'adresse à laquelle il faut commencer à mémoriser son contenu.

Dans un mode de mise en oeuvre préféré, après la transmission du second message, on assemble, sur commande, la partie transmise du premier message et le second message, arrivant consécutivement, en éliminant l'en-tête du second message.

En d'autres termes, il s'agit d'un premier message ayant préalablement été coupé comme décrit précédemment en une partie transmise du premier message et un second message, à destination d'un même agent destinataire qui est l'agent destinataire du premier message. Le second message a pour contenu la partie non transmise du premier message.

Selon un autre aspect de l'invention, il est également proposé un système de transmission de messages dans un réseau d'interconnexions comprenant des éléments initiateurs de messages, des éléments de commutation de messages, et des éléments destinataires de messages. Les messages comprennent un en-tête et un contenu comprenant des quanta de données. Les messages sont destinés à des éléments destinataires capables de traiter un quantum de données du contenu d'un message indépendamment des autres quanta de données du contenu du message. Le système comprend au moins un élément de commutation comprenant au moins une entrée équipée d'un moyen de transmission de messages capable de débuter la transmission d'un premier message, et au moins une sortie équipée d'un moyen de décision de transmission. Le moyen de transmission comprend un moyen de mémorisation capable de mémoriser l'en-tête du premier message, et le moyen de décision comprend un moyen pour interrompre la transmission du premier message, et un moyen pour débuter la transmission d'un second message qui a pour contenu la partie non transmise du contenu du premier message.

Dans un mode de réalisation préféré, l'en-tête d'un message comprenant une information de taille indiquant la taille du contenu du message, le moyen de transmission de messages comprend, en outre, un moyen pour mettre à jour, au fur et à mesure de la transmission des quanta de données du contenu du premier message, l'information de taille de l'en-tête du premier message, indiquant la taille du contenu non transmis du premier message, pour obtenir un en-tête de second message, l'en-tête du premier message étant mémorisé dans le moyen de mémorisation.

Dans un mode de réalisation avantageux, l'en-tête d'un message comprenant une information d'adresse indiquant une adresse de début de stockage du contenu du message, le moyen de transmission de messages comprend, en outre, un moyen pour mettre à jour, au fur et à mesure de la transmission des quanta de données du contenu du premier message, l'information d'adresse de l'en-tête du premier message, indiquant l'adresse de début de stockage du contenu non transmis du premier message, pour obtenir un en-tête de second message, l'en-tête du premier message étant mémorisé dans le moyen de mémorisation.

Dans un mode de réalisation préféré, le système comprend, en outre, un autre élément de commutation situé après l'élément de commutation, entre l'élément initiateur et l'élément destinataire du premier message, l'autre élément de commutation comprenant au moins une sortie comprenant un moyen de décision comprenant un moyen pour assembler la partie transmise du premier message et le second message, arrivant consécutivement, en éliminant l'en-tête du second message.

D'autres buts, caractéristiques et avantages de l'invention apparaîtront à la lecture de la description suivante, donnée à titre d'exemple non limitatif, et faite en référence aux dessins annexés sur lesquels :
- la figures 1 est une vue schématique d'un mode de réalisation d'un système selon un aspect de l'invention ;
- les figures 2 à 5 à sont des schémas logiques illustrant le fonctionnement du système de la figure 1 ;
- la figure 6 est une vue schématique d'un mode de réalisation d'un système selon un autre aspect de l'invention ;

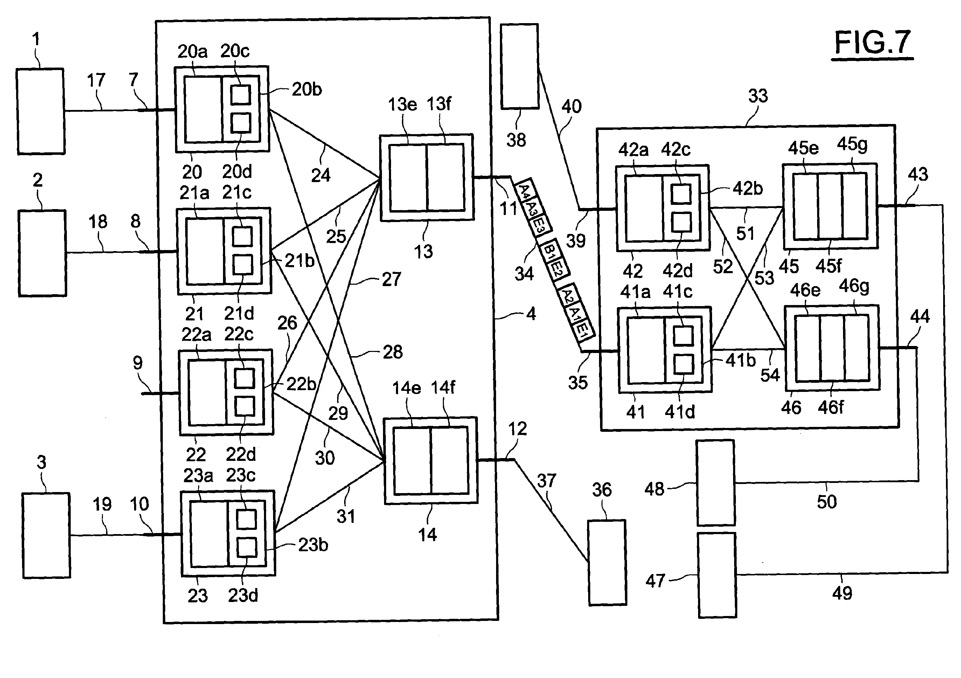

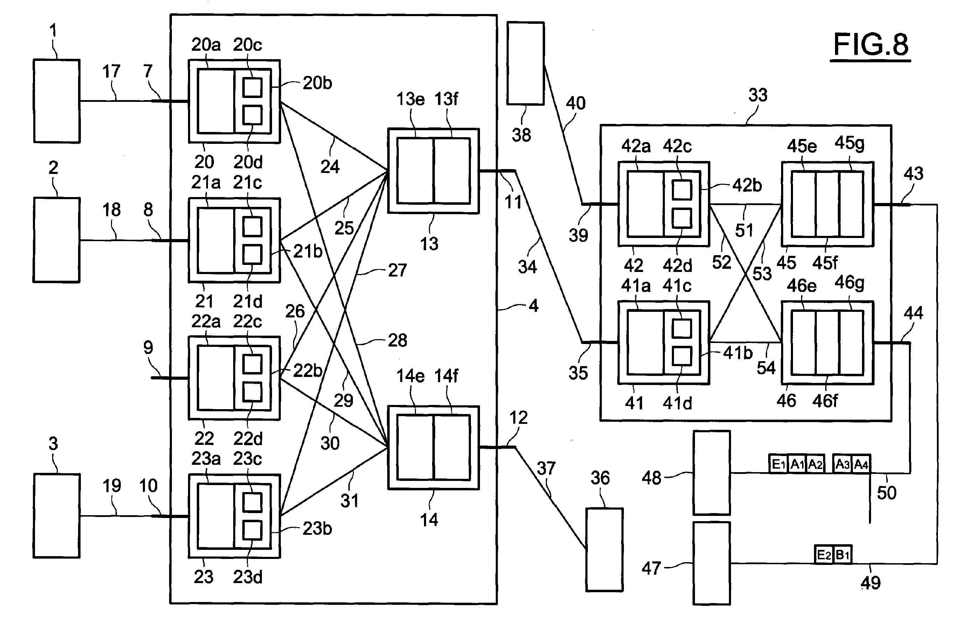

- les figures 7 et 8 sont des schémas logiques illustrant le fonctionnement système de la figure 6 ;

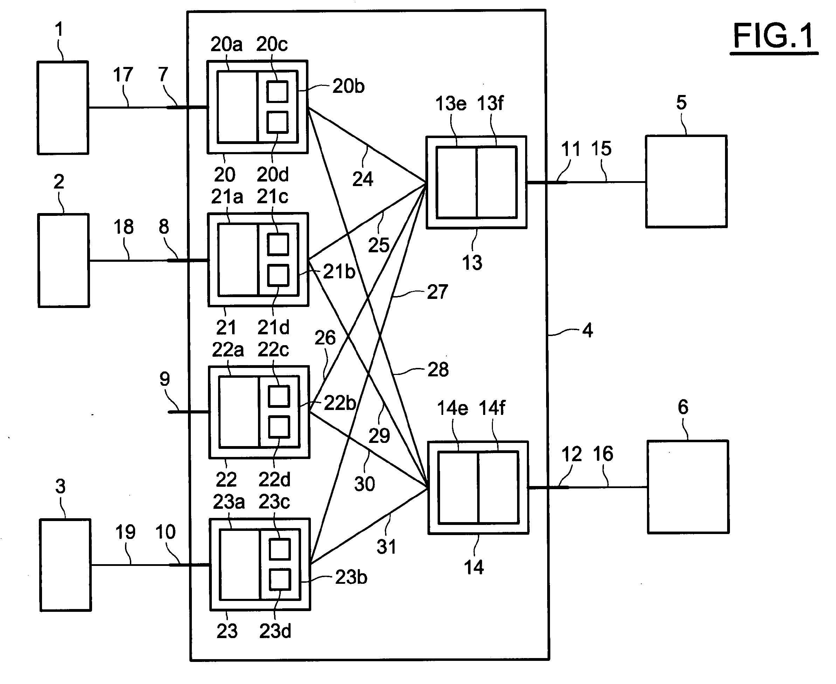

Sur la figure 1, un système d'interconnexions comprend trois éléments initiateurs de messages 1, 2, 3, un élément de commutation ou routeur 4, et deux agents destinataires 5, 6. Un élément initiateur est, par exemple, une unité centrale de traitement (CPU), ou une interface externe, et un élément destinataire est, par exemple, une mémoire vive dynamique synchrone (SDRAM). Le nombre de chacun de ces éléments n'est pas limité à l'exemple décrit.

Dans cet exemple, l'élément de commutation 4 comprend quatre entrées 7, 8, 9, 10. Chaque entrée d'un élément d'un système d'interconnexions est reliée à au plus un autre élément du système d'interconnexions. L'élément de commutation 4 comprend en outre deux sorties 11 et 12. Chaque sortie 11, 12, de l'élément de commutation 4 comprend respectivement un module de décision de transmission 13, 14, apte à décider quel message va être transmis sur sa sortie et s'il faut interrompre la transmission d'un message en cours de transmission sur sa sortie. Les sorties 11, 12, de l'élément de commutation 4, sont respectivement connectées à une entrée d'un élément destinataire 5, 6, par des connexions 15, 16. Les éléments initiateurs 1, 2, 3, sont respectivement reliés aux entrées 7, 8, 10, de l'élément de commutation 4 par des connexions 17, 18, 19.

Chaque entrée 7, 8, 9, 10 de l'élément de commutation 4, comprend respectivement un module de transmission de messages 20, 21, 22, 23, chacun comprenant respectivement un module de mémorisation 20a, 21 a, 22a, 23a, apte à mémoriser un en-tête de message, et un module de mise à jour d'en-tête 20b, 21b, 22b, 23b, apte à mettre à jour un en-tête mémorisé dans le module de mémorisation respectif 20a, 21a, 22a, 23a. Chaque module de mise à jour d'en-tête 20b, 21b, 22b, 23b, comprend respectivement un module de mise à jour d'une information de taille 20c, 21c, 22c, 23c, indiquant la taille du contenu du message dont l'en-tête est mémorisé respectivement dans le module de mémorisation 20a, 21a, 22a, 23a. Chaque module de mise à jour d'en-tête 20b, 21b, 22b, 23b, comprend respectivement un module de mise à jour d'une information d'adresse 20d, 21d, 22d, 23d, indiquant une adresse de début de stockage du contenu du message dont l'en-tête est mémorisé respectivement dans le module de mémorisation 20a, 21a, 22a, 23a.

Chaque module de décision de transmission 13, 14, comprend respectivement un module d'interruption 13e, 14e de transmission d'un premier message, et un module 13f, 14f, pour débuter la transmission d'un second message qui a pour contenu la partie non transmise du contenu du premier message. Les modules de transmission de messages 20, 21, 22, 23, sont respectivement reliés au module de décision 13 par des connexions 24, 25, 26, 27, et au module de décision 14 par des connexions 28, 29, 30, 31.

Nous allons maintenant décrire un exemple de fonctionnement d'un aspect de l'invention mise en oeuvre par un mode de réalisation représenté par la figure 1, dans lequel l'interruption de transmission d'un message long à pour but de laisser passer un message court plus prioritaire.

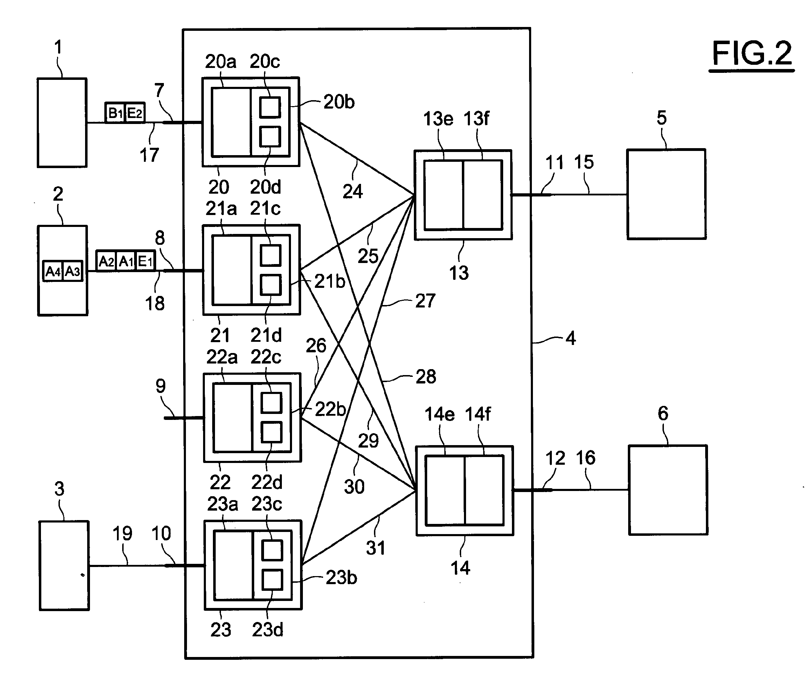

Comme cela est représenté sur la figure 2, l'élément initiateur 2 a commencé à transmettre à l'entrée 8 de l'élément de commutation 4 un premier message à destination de l'élément destinataire 6. Le premier message est un message long, car il contient un grand nombre de quanta de données dans son contenu, nombre valant 4 dans cet exemple. Ce premier message comprend un en-tête E1 et un contenu comprenant 4 quanta de données successives A₁, A₂, A₃, et A₄. L'élément initiateur 2 commence par envoyer l'en-tête E₁ et les quanta de données A₁, A₂, par la connexion 18. L'élément initiateur 1 transmet à l'entrée 7 de l'élément de commutation 4 un message, un message court et urgent comprenant un en-tête E₂ et un quantum de données B₁, à destination de l'élément destinataire 6. L'urgence est, par exemple, indiquée par une information de priorité élevée, comprise dans l'en-tête des messages.

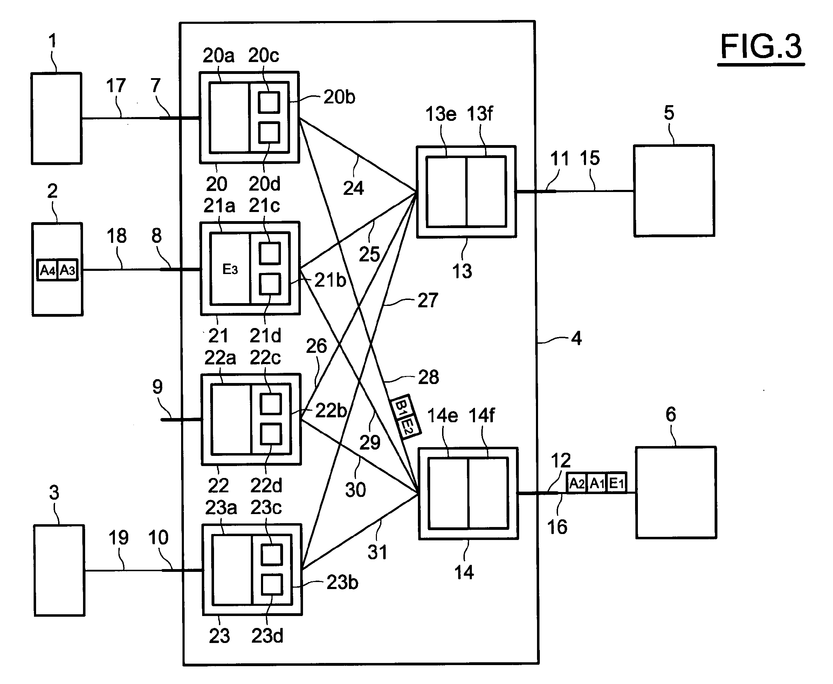

Comme cela est indiqué sur la figure 3, le début du premier message est transmis par la connexion 29 puis la connexion 16 à destination de l'élément destinataire 6. Le début du premier message comprend, par exemple, l'en-tête E1 et les quanta de données A₁ et A₂.

Si le premier message exprime une instruction de type "lire" ("load" en langue anglaise), alors l'en-tête contient une information indiquant l'adresse où il faut aller lire des données, et une information indiquant la taille des données attendues en retour. Dans ce cas, l'en-tête E₁ qui est mémorisé dans le module de mémorisation 21a, n'est pas mis à jour, car cela est inutile. Par contre dans le cas d'une instruction de type "écrire" ("store" en langue anglaise), que nous utiliserons dans la suite de la description pour les messages décrits, l'en-tête E₁ mémorisé dans le module de mémorisation 21a est mis à jour par le module 21b.

L'en-tête E₁ du premier message comprend une information de taille du contenu du premier message qui est mise à jour par le module 21c et une information d'adresse de début de stockage du contenu du premier message qui est mise à jour par le module 21d, au fur et à mesure de la transmission des quanta de données du contenu du premier message. Dans cet exemple, l'information de taille a été décrémentée de la taille des données transmises, c'est-à-dire de la taille de deux quanta de données correspondant à la taille des deux quanta de données A₁ et A₂, et l'information d'adresse de début de stockage a été incrémentée de la taille des données transmises, c'est-à-dire de la taille de deux quanta de données correspondant à la taille des deux quanta de données A₁ et A₂. L'en-tête mémorisé E₁ est mis à jour dans le module de mémorisation, et on le nomme alors E₃. A ce moment, le module d'interruption de transmission 14e du module de décision 14, interrompt la transmission du premier message, car il a connaissance de l'émission du message court et de la priorité plus élevée de ce message court, comme tout élément de commutation connu de l'homme du métier. Le module de décision 14 informe alors l'élément initiateur 2, par exemple par une connexion spéciale reliant l'élément de commutation 4 et l'élément initiateur 2, d'interrompre la transmission du premier message. Seul le début du premier message a été transmis à destination de l'élément destinataire 6, c'est-à-dire l'en-tête E₁ et les quanta de données A₁ et A₂.

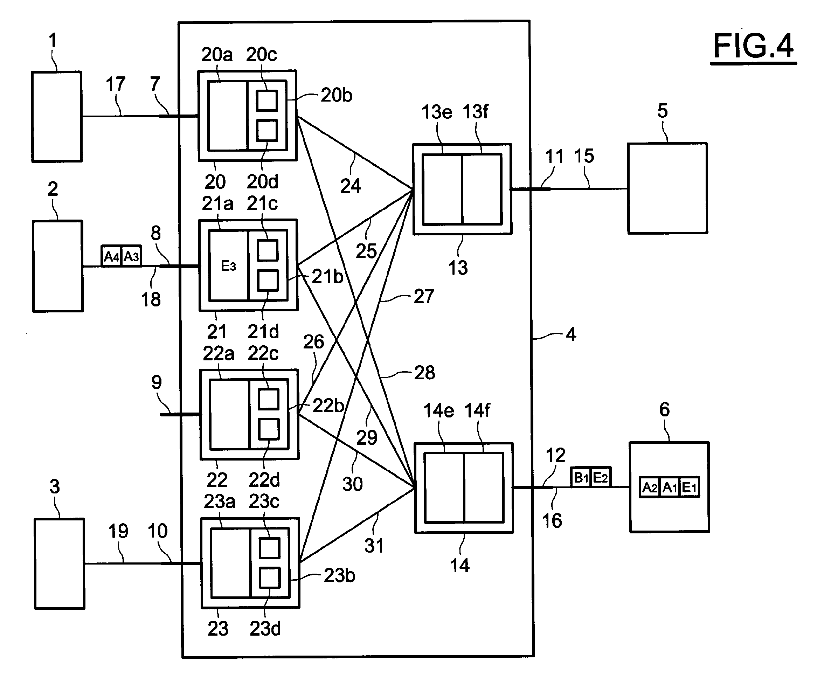

Ultérieurement, comme représenté sur la figure 4, le message court de plus haute priorité étant transmis à l'élément destinataire 6, l'élément initiateur 2 transmet la fin du contenu du premier message, comprenant les quanta de données non transmises A₃ et A₄, à destination de l'élément destinataire 6, par l'entrée 8 de l'élément de commutation 4. Le module 14f du module de décision 14 débute alors la transmission d'un second message, ayant pour en-tête, l'en-tête E₃ mémorisé dans le module de mémorisation 21a, et pour contenu les quanta de données A₃ et A₄.

Il a donc été possible d'arrêter, pour reprendre ultérieurement, la transmission d'un message de longue taille afin, par exemple, de transmettre un message de petite taille de priorité plus grande. On a donc augmenté la qualité de service du système, sans dégrader la bande passante, et cela à faible coût, car on a stocké, temporairement, uniquement l'en-tête des messages transmis par les éléments de commutation, ce qui ne nécessite qu'une très faible taille mémoire pour gérer les contextes.

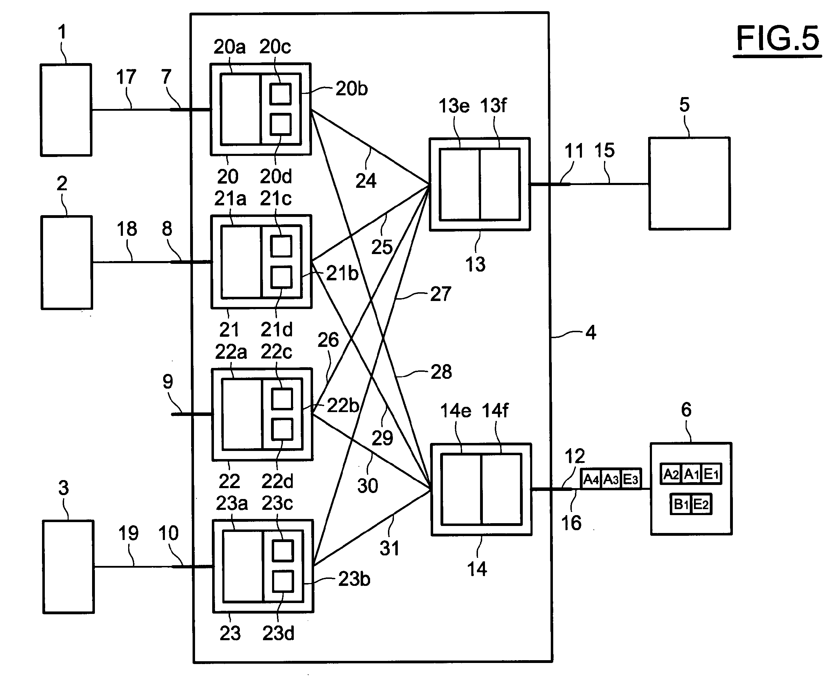

Ce second message, est alors transmis à l'élément destinataire 6, comme sur la figure 5.

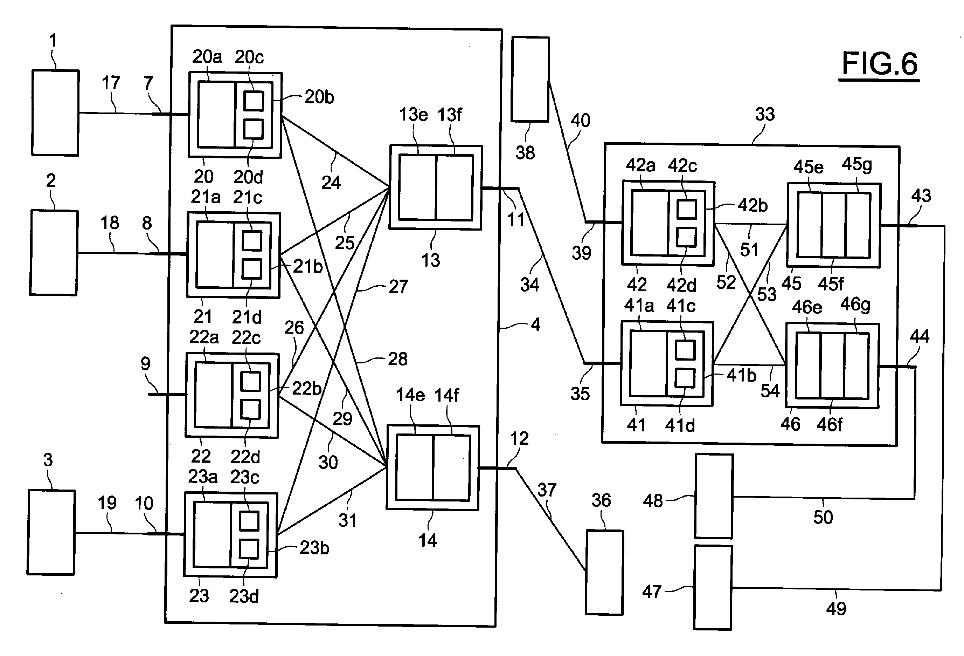

Sur la figure 6, on a représenté un autre mode de réalisation de l'invention, dans lequel, lorsqu'un message long a précédemment été coupé en deux messages plus courts, comme cela est précédemment décrit, et que ces deux messages arrivent consécutivement en entrée d'un élément de commutation suivant, alors ces deux messages sont assemblés de manière à obtenir le message long d'origine.

Le système décrit comprend une partie commune avec celui de la figure 1, que nous ne décrirons pas à nouveau. Le système comprend en outre un autre élément de commutation 33 connecté à l'élément de commutation 4 par une connexion 34 qui relie la sortie 11 de l'élément de commutation 4 et une entrée 35 de l'élément de commutation 33. Le système comprend également un élément destinataire supplémentaire 36 connecté à la sortie 12 de l'élément de commutation 4 par une connexion 37, et un élément initiateur supplémentaire 38 connecté à une entrée 39 de l'élément de commutation 33 par une connexion 40.

Les entrées 35, 39 de l'élément de commutation 33 comprennent respectivement un module de transmission de messages 41, 42, chacun comprenant respectivement un module de mémorisation 41 a, 42a, apte à mémoriser un en-tête de message, et un module de mise à jour d'en-tête 41b, 42b, apte à mettre à jour un en-tête mémorisé dans le module de mémorisation respectif 41a, 42a. Chaque module de mise à jour d'en-tête 41b, 42b, comprend respectivement un module de mise à jour d'une information de taille 41 c, 42c, indiquant la taille du contenu du message dont l'en-tête est mémorisé respectivement dans le module de mémorisation 41a, 42a. Chaque module de mise à jour d'en-tête 41b, 42b comprend respectivement un module de mise à jour d'une information d'adresse 41d, 42d, indiquant une adresse de début de stockage du contenu du message dont l'en-tête est mémorisé respectivement dans le module de mémorisation 41a, 42a. L'élément de commutation 33 comprend en outre deux sorties 43, 44, comprenant chacune respectivement un module de décision de transmission 45, 46.

Chaque module de décision de transmission 45, 46, comprend respectivement un module d'interruption 45e, 46e, de transmission d'un premier message, et un module 45f, 46f, pour débuter la transmission d'un second message qui a pour contenu la partie non transmise du contenu du premier message, comme l'élément de commutation 4. Chaque module de décision 45, 46, comprend en outre, respectivement, un module 45g, 46g, d'assemblage de deux messages consécutifs correspondants à un premier et un second message d'une interruption de transmission d'un long message comme précédemment décrit. Les sorties 43, 44 de l'élément de commutation 33 sont respectivement reliées à deux éléments destinataires 47, 48 par des connexions 49, 50. Le module de décision 42 est relié aux modules de décision 45, 46, par des connexions respectives 51, 52, et le module de décision 41 est relié aux modules de décision 45, 46, par des connexions respectives 53, 54.

On suppose qu'une interruption de transmission d'un premier message long comprenant un en-tête E1 et un contenu comprenant 4 quanta de données successives A₁, A₂, A₃, et A₄ a subi une interruption de transmission comme cela est précédemment décrit. L'élément de commutation 4 a alors transmis le début du premier message, comprenant l'en-tête E1 et les quanta de données A₁, A₂, puis a transmis un message court prioritaire comprenant un en-tête E₂ et un quantum de données B₁, plus prioritaire, et enfin a transmis un deuxième message comprenant un en-tête E₃, correspondant à l'en-tête E₁ mis à jour, et les quanta de données A₃, A₄ restant à transmettre. Dans cet exemple, ces messages sont transmis par la sortie 11 de l'élément de commutation 4 à l'entrée 35 de l'élément de commutation 33. Mais, le message court prioritaire est à destination de l'élément destinataire 47, et les autres messages sont à destination de l'élément destinataire 48.

Le message court prioritaire est alors transmis à la sortie 43 de l'élément de commutation 33, à destination de l'élément destinataire 47, par la connexion 49.

Le module de décision 46 reçoit alors deux messages consécutifs correspondant à une interruption de transmission antérieure selon un aspect de l'invention. En effet, il reçoit un message correspondant au début du message long, comprenant l'en-tête E₁ et les quanta de données A₁, A₂, suivi du message comprenant l'en-tête E₃ et les quanta de données A₃, A₄. Le module d'assemblage 46g détecte que ces deux messages proviennent d'une interruption de transmission précédente car l'en-tête mémorisé E₁ mis à jour par le procédé et l'en-tête E₃ du second message ont la même destination, la même information de taille de contenu de message, et même information d'adresse de début de stockage de contenu, pour une instruction de type "écrire". Le module d'assemblage 46g élimine alors l'en-tête E₃ et transmet donc l'en-tête E₁ suivi des quanta de données A₁, A₂, suivies des quanta de données A₃, A₄, ce qui constitue le premier message long avant son interruption de transmission. L'élément destinataire 48 recevra alors le message long initial en un unique message.

Cela permet en outre d'améliorer encore l'efficacité de la bande passante, en ne transmettant pas inutilement l'en-tête E₃.

L'invention permet donc à très faible coût, d'avoir une qualité de service élevée du système d'interconnexion, tout en ayant une excellente bande passante.

## Revendications

1. Procédé de transmission de messages dans un réseau d'interconnexions comprenant des éléments initiateurs de messages, des éléments de commutation de messages, et des éléments destinataires de messages, lesdits messages comprenant un en-tête et un contenu comprenant des quanta de données, lesdits messages étant destinés à des éléments destinataires capables de traiter un quantum de données du contenu d'un message indépendamment des autres quanta de données du contenu du message, dans lequel :
- on débute la transmission d'un premier message par un agent de commutation (4) ;
- on mémorise l'en-tête (E₁) du premier message ;
- on interrompt, sur commande dynamique, la transmission du premier message ; puis, ultérieurement,
- on débute la transmission d'un second message qui a pour contenu la partie non transmise (A₃, A₄) du contenu du premier message.

2. Procédé selon la revendication 1, dans lequel, l'en-tête d'un message comprenant une information de taille indiquant la taille du contenu du message, on met à jour, au fur et à mesure de la transmission des quanta de données du contenu du premier message, l'information de taille de l'en-tête mémorisé (E₁) du premier message, indiquant la taille du contenu non transmis du premier message, pour obtenir un en-tête (E₃) de second message.

3. Procédé selon la revendication 1 ou 2, dans lequel, l'en-tête d'un message comprenant une information d'adresse indiquant une adresse de début de stockage du contenu du message, on met à jour, au fur et à mesure de la transmission des quanta de données du contenu du premier message, l'information d'adresse de l'en-tête mémorisé (E₁) du premier message, indiquant l'adresse de début de stockage du contenu du premier message, pour obtenir un en-tête (E₃) de second message.

4. Procédé selon l'une quelconque des revendications 1 à 3, dans lequel, après la transmission du second message, on assemble, sur commande, la partie transmise (E₁A₁A₂) dudit premier message et le second message, arrivant consécutivement, en éliminant l'en-tête (E₃) du second message.

5. Système de transmission de messages dans un réseau d'interconnexions comprenant des éléments initiateurs de messages, des éléments de commutation de messages, et des éléments destinataires de messages, lesdits messages comprenant un en-tête et un contenu comprenant des quanta de données, lesdits messages étant destinés à des éléments destinataires capables de traiter un quantum de données du contenu d'un message indépendamment des autres quanta de données du contenu du message, le système comprenant au moins un élément de commutation (4) comprenant au moins une entrée (7, 8, 9, 10) équipée d'un moyen de transmission (20, 21, 22, 23) de messages capable de débuter la transmission d'un premier message, et au moins une sortie (11, 12) équipée d'un moyen de décision (13, 14) de transmission, ledit moyen de transmission (20, 21, 22, 23) comprenant un moyen de mémorisation (20a, 21a, 22a, 23a) capable de mémoriser l'en-tête (E₁) du premier message, et ledit moyen de décision (13, 14) comprenant un moyen (13e, 14e) pour interrompre la transmission du premier message, et un moyen (13f, 14f) pour débuter la transmission d'un second message qui a pour contenu la partie non transmise (A₃A₄) du contenu du premier message.

6. Système selon la revendication 5, dans lequel, l'en-tête d'un message comprenant une information de taille indiquant la taille du contenu du message, ledit moyen de transmission (20, 21, 22, 23) de messages comprend, en outre, un moyen (20c, 21c, 22c, 23c) pour mettre à jour, au fur et à mesure de la transmission des quanta de données du contenu du premier message, l'information de taille de l'en-tête (E₁) du premier message, indiquant la taille du contenu non transmis (A₃A₄) du premier message, pour obtenir un en-tête de second message, ledit en-tête (E₁) du premier message étant mémorisé dans ledit moyen de mémorisation (20a, 21a, 22a, 23a).

7. Système selon la revendication 5 ou 6, dans lequel, l'en-tête d'un message comprenant une information d'adresse indiquant une adresse de début de stockage du contenu du message, ledit moyen de transmission (20, 21, 22, 23) de messages comprend, en outre, un moyen (20d, 21d, 22d, 23d) pour mettre à jour, au fur et à mesure de la transmission des quanta de données du contenu du premier message, l'information d'adresse de l'en-tête (E₁) du premier message, indiquant l'adresse de début de stockage du contenu non transmis (A₃A₄) du premier message, pour obtenir un en-tête (E₃) de second message, ledit en-tête (E₁) du premier message étant mémorisé dans ledit moyen de mémorisation (20a, 21a, 22a, 23a).

8. Système selon l'une quelconque des revendications 5 à 7, comprenant, en outre, un autre élément de commutation (33) situé après ledit élément de commutation (4), entre l'élément initiateur et l'élément destinataire du premier message, ledit autre élément de commutation (33) comprenant au moins une sortie (43, 44) comprenant un moyen de décision (45, 46) comprenant en outre un moyen (45g, 46g) pour assembler la partie transmise (E₁A₁A₂) dudit premier message et le second message, arrivant consécutivement, en éliminant l'en-tête (E₃) du second message.
